# EUROPEAN PATENT APPLICATION

(11) **EP 2 567 770 A1**
(43) Date of publication of application: **13.03.2013**
(21) Application number: 12179813.6
(22) Date of filing: 09.08.2012
(51) Int. Cl.: B23D 61/04, B23D 61/02

(54) **Brazing bond type diamond tool with excellent cuttability and method of manufacturing the same**

(30) Priority: 07.09.2011 KR 20110090504
(71) Applicant: EHWA Diamond Industrial Co., Ltd., Osan-si, Gyeonggi-do 447-060 (KR)
(72) Inventor: Hong, Jae-Hyun, 445-730, Gyeonggi-do (KR); Choi, Jong Suk, 131-200, Seoul (KR); Song, Young Choul, 447-741, Gyeonggi-do (KR)
(74) Representative: Winter, Brandl, Fürniss, Hübner, Röss, Kaiser, Polte - Partnerschaft

(57) **Abstract**

The present disclosure provides a brazing bond type diamond tool (100) having excellent cuttability and a method of manufacturing the same. The diamond tool (100) includes a shank (110) having a body and a tip portion formed along an edge of the body, and a brazing bond layer (120) formed on the tip portion of the shank (110) to secure diamond particles (121)with a brazing bond (122). The tip portion is thinner (T3) than the body and is integrally formed with the body.

## Description

### BACKGROUND

### 1. Technical Field

The present invention relates to a technique for manufacturing a diamond tool, and, more particularly, to a brazing bond type diamond tool which has improved cuttability through a unique shank structure, and a method of manufacturing the same.

### 2. Description of the Related Art

A general diamond tool is manufactured by welding a metal powder sintered compact having diamond particles to a shank constituting a main body of the diamond tool. The metal powder sintered compact acts as a bonding material for securing the diamond particles.

Such a diamond tool has a problem with low impact strength.

To solve this problem, Korean Patent Publication No. 10-2000-0053707 (published on 2000.09.05.) discloses a technique of forming a brazing bond by depositing a slurry solution of a brazing metal bond onto a substrate and dispersing diamond particles therein, followed by heating to a temperature of about 1300°C or less.

For the diamond tool manufactured by the method disclosed in this publication, a brazing bond layer is formed on a tip portion formed along an edge of a shank. The brazing bond layer includes a brazing bond and diamond particles. Accordingly, a cutting section of the diamond tool participating in cutting operation has a very high thickness, which is determined by the sum of the thickness of the tip portion and the thicknesses of the brazing bond layer at both sides of the tip portion.

Thus, considering that the diamond tool has increased cuttability with decreasing thickness of the cutting section until it reaches a certain thickness value, the brazing bond type diamond tool does not have high cuttability.

### BRIEF SUMMARY

Embodiments of the present invention provide a brazing bond type diamond tool which has improved cuttability through a unique shank structure and a method of manufacturing the same.

In accordance with one aspect of the present invention, a diamond tool includes a shank having a body and a tip portion formed along an edge of the body; and a brazing bond layer formed on the tip portion of the shank to secure diamond particles with a brazing bond. Here, the tip portion is thinner than the body of the shank.

The body of the shank may have a thickness ranging from 1.0 mm to 3.0 mm.

The diamond particles may have an average particle diameter ranging from 25 to 50 mesh in consideration of improved cuttability.

In accordance with another aspect of the present invention, a method of manufacturing a diamond tool includes: (a) preparing a shank including a body and a tip portion formed along an edge of the body, the tip portion being thinner than the body; (b) depositing a metal powder for forming a brazing bond on the tip portion of the shank; (c) setting diamond particles on the tip portion having the metal powder deposited thereon; and (d) melting the metal powder to form the brazing bond.

According to the present invention, in the brazing bond type diamond tool, the tip portion of the shank is thinner than the shank body. As a result, when a brazing bond layer includes diamond particles, the overall thickness of the cutting section becomes similar to the thickness of the shank body. Accordingly, the brazing bond type diamond tool may have improved cuttability through a thin cutting section.

In addition, in the brazing bond type diamond tool according to the present invention, the shank body has a thickness of at least 1.0 mm, thereby preventing the diamond tool from trembling during rotation at high speed.

### BRIEF DESCRIPTION OF THE DRAWINGS

The above and other aspects, features, and advantages of the present invention will become apparent from the detailed description of the following embodiments in conjunction with the accompanying drawings, in which:
Fig. 1 is a perspective view of a brazing bond type flat blade-shaped diamond tool in accordance with one embodiment of the present invention;
Fig. 2 is a sectional view of one example of a brazing bond layer formed on a shank in which a shank body has the same thickness as that of a tip portion of the shank;
Fig. 3 is a sectional view of one example of a brazing bond layer formed on a shank in which a tip portion of the shank has a smaller thickness than a shank body;
Fig. 4 is a flowchart of a method of manufacturing a brazing bond type diamond tool in accordance with one embodiment of the present invention; and
Fig. 5 is a graph depicting a relationship between cutting time and particle size of diamond particles.

### DETAILED DESCRIPTION

Embodiments of the present invention will now be described in detail with reference to the accompanying drawings. It should be understood that the present invention is not limited to the following embodiments and may be embodied in different ways, and that the embodiments are given to provide complete disclosure of the present invention and to provide thorough understanding of the invention to those skilled in the art. The scope of the invention is limited only by the accompanying claims and equivalents thereof. Like components will be denoted by like reference numerals throughout the specification.

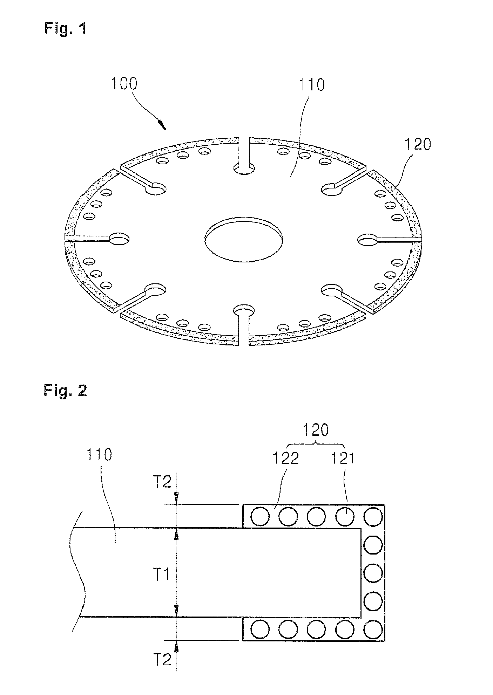

Fig. 1 is a perspective view of a brazing bond type flat blade-shaped diamond tool in accordance with one embodiment of the present invention.

Referring to Fig. 1, a brazing bond type diamond tool includes a shank 110 and a brazing bond layer 120.

The shank 110 is made of steel such as carbon tool steel, alloy tool steel, and the like, and corresponds to a main body of the diamond tool.

The shank 110 may be divided into a body formed at a central region of the shank and a tip portion formed along an edge of the body. Although the body is not distinguished from the tip portion via a clear border, an edge of the shank having a brazing bond layer formed thereon may be regarded as the tip portion.

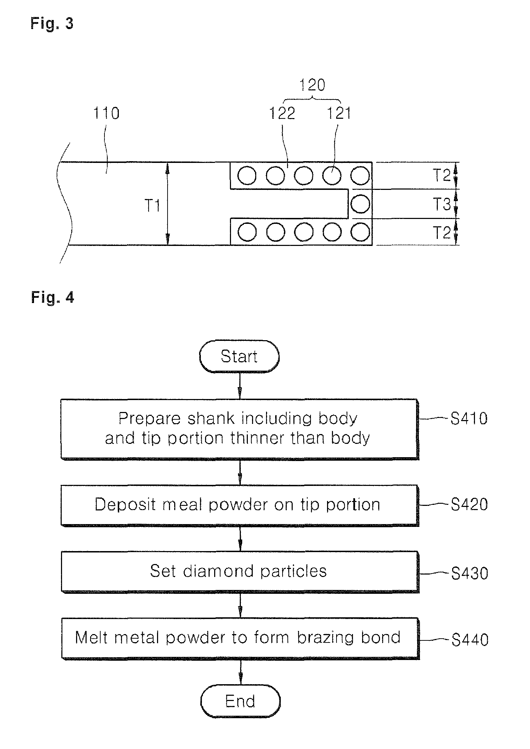

According to the present invention, the tip portion of the shank 110 has a lower thickness than the body thereof. This structure will be described in more detail below with reference to Fig. 2 and Fig. 3.

The brazing bond layer 120 is formed on the tip portion of the shank and has diamond particles 121 secured by a brazing bond 122. The brazing bond 122 may be formed by brazing a metal powder.

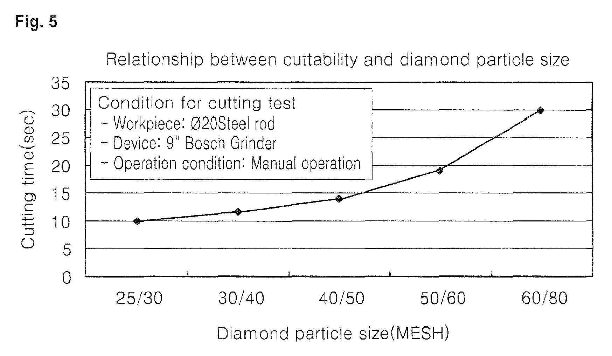

Fig. 5 is a graph depicting a relationship between cutting time and particle size of diamond particles.

Referring to Fig. 5, as the average particle size of the diamond particles decreases in terms of mesh value, that is, as the size of the diamond particles increases, cutting time is decreased, thereby providing good cuttability. Here, if the size of the diamond particles is excessively large, the diamond particles cannot be stably secured by the brazing bond.

Thus, the diamond particles 121 secured by the brazing bond layer 120 may have an average particle diameter ranging from 25 to 50 mesh.

If the average particle diameter of the diamond particles is less than 25 mesh, the diamond tool has good cuttability. However, in this case, the diamond particles have an excessively large particle size, and thus the brazing bond does not stably secure the diamond particles, so that the diamond particles can be easily separated from the shank, thereby reducing the lifespan of the diamond tool.

On the contrary, if the diamond particles have an average particle diameter exceeding 50 mesh, the diamond particles have an excessively small particle size, and thus an exposed height of the diamond particles from the brazing bond layer is low, thereby causing deterioration in cuttability of the diamond tool.

The brazing bond may be formed by brazing a Ni-based metal powder, which comprises 1∼10 wt% of silicon (Si), 5∼15 wt% of chromium (Cr), 5∼15 wt% of cobalt (Co), and the balance of nickel. The brazing bond composed of the metal powder having this composition advantageously exhibits excellent coupling force with respect to steel, which is used as a material for the shank.

In the nickel-based metal powder, cobalt and chromium assist in chemical coupling between the brazing bond, the diamond particles and the shank.

Each of chromium and the cobalt may be present in an amount of 5∼15 wt% based on the total weight of the brazing bond. If the amount of chromium or cobalt is less than 5 wt%, the coupling force between the brazing bond and the diamond particles or the shank is low, causing deterioration in lifespan of the diamond tool. On the contrary, if the amount of chromium or cobalt exceeds 15 wt%, the diamond particles undergo excessive chemical coupling, which causes deterioration in strength of the diamond particles.

Further, in the nickel-based metal powder, silicon serves to improve flowability of the brazing bond formed by brazing the metal powder.

Silicon may be present in an amount of 1∼10 wt% based on the total amount of the brazing bond. An amount of silicon less than 1 wt% results in insufficient effect obtained by the use of silicon, and an amount of silicon exceeding 10 wt% provides excessively high flowability to the brazing bond, causing the brazing bond to flow instead of holding the diamond particles.

Further, the nickel-based metal powder may further contain metals such as boron, phosphorous, tin, and the like in order to enhance the flowability of the brazing bond. In this case, the amount of nickel is reduced corresponding to the amounts of the additional metal components. These additional metal components may be present in an amount of 10 wt% or less based on the total amount of the brazing bond. The amount of the additional metal components exceeding 10 wt% provides excessively high flowability to the brazing bond, causing the brazing bond to flow instead of holding the diamond particles.

Fig. 2 is a sectional view of one example of a brazing bond layer formed on a shank in which a shank body has the same thickness as that of a tip portion of the shank, and Fig. 3 is a sectional view of one example of a brazing bond layer formed on a shank in which a tip portion of the shank has a smaller thickness than a shank body.

A section of the diamond tool participating in cutting (hereinafter, "cutting section") may be composed of the tip portion and the brazing bond layer 120 of the shank 110. As described above, as the cutting section becomes thinner, the cutting plane becomes sharper, thereby providing better cuttability.

Reduction in thickness of the cutting section may be achieved by reducing the thickness of the shank or the size of the diamond particles. However, when the shank has a small thickness, the diamond tool is likely to tremble during rotation at high speed, and when the diamond particles have a small size, the diamond tool can be deteriorated in cuttability. Accordingly, a conventional brazing bond type diamond tool has a limit in improvement of cuttability.

On the other hand, the present invention provides a brazing type diamond tool which has a unique shank structure so as not to suffer from trembling during rotation at high speed while ensuring good cuttability.

In a conventional brazing bond type diamond tool as shown in Fig. 2, the shank body has the same thickness as that of the tip portion. Thus, the cutting section of the diamond tool including the tip portion and the brazing bond layer of the shank has a thickness represented by T1 + 2 x T2. On the other hand, for the brazing bond type diamond tool according to the present invention as shown in Fig. 3, the cutting section of the diamond tool including the tip portion and the brazing bond layer of the shank has a thickness represented by T3 + 2 x T2.

Here, in the brazing bond type diamond tool shown in Fig. 3, the thickness (T3) of the tip portion is less than the thickness (T1) of the body (T3 < T1). Thus, it is possible to achieve the effect of reducing the thickness of the cutting section. Accordingly, the brazing bond type diamond tool may have improved cuttability.

On the other hand, in the brazing bond type diamond tool shown in Fig. 1, the body of the shank 110 has a thickness T1 greater than the thickness T3 of the tip portion (T1 > T3). This structure is conceived to prevent the diamond tool from trembling during rotation at high speed by securing a desired thickness of the shank.

If the shank 110 has too low a thickness, the diamond tool suffers from trembling during rotation at high speed. Such trembling causes deterioration in cuttability and lifespan of the diamond tool and does not guarantee operator safety. However, according to the present invention, only the tip portion of the shank 110 is reduced in thickness and the body is increased in thickness, thereby preventing the diamond tool from trembling during rotation at high speed.

In some embodiments, the body of the shank 110 may have a thickness ranging from 1.0 mm to 3.0 mm. If the body of the shank 110 has a thickness of less than 1.0 mm, the diamond tool can suffer from trembling during rotation at high speed and does not guarantee linear cutting due to bending of the shank during cutting. If the body of the shank 110 has a thickness exceeding 3.0 mm, the diamond tool undergoes cuttability deterioration due to thickness increase of the cutting section, which includes the tip portion and the brazing bond layer 120.

Although the flat blade-shaped diamond tools are illustrated as the examples of the brazing bond type diamond tool in Figs. 1 and 3, the present invention is not limited thereto. The present invention may be applied to brazing bond type diamond tools of different shapes, such as a cup shape, a core drill shape, and the like.

Fig. 4 is a flowchart of a method of manufacturing a brazing bond type diamond tool in accordance with one embodiment of the present invention.

Referring to Fig. 4, the method of manufacturing a brazing bond type diamond tool according to this embodiment includes preparing a shank (S410), depositing a metal powder (S420), setting diamond particles (S430), and forming a brazing bond (S440).

In operation of preparing a shank (S410), a shank including a body and a tip portion formed along an edge of the body is prepared. Here, the tip portion of the shank has a lower thickness than the body.

As described above, the shank including the tip portion thinner than the body is used. The body of the shank preferably has a thickness of 1.0 mm or more, more preferably in the range from 1.0 mm to 3.0 mm.

Next, in operation of depositing a metal powder (S420), a metal powder for a brazing bond is deposited on the tip portion of the shank.

The shank may be subjected to cleaning to remove foreign matter from the surface of the shank before deposition of the metal powder. Cleaning may be carried out in various ways such as plasma cleaning, alcohol or water cleaning, and the like.

It is advantageous that the prepared metal powder exhibits good coupling force with respect to the shank and diamond particles. In some embodiments, the metal powder may be a Ni-based metal powder, which comprises 1∼10 wt% of silicon (Si), 5∼15 wt% of chromium (Cr), 5∼15wt% of cobalt (Co), and the balance of nickel.

The metal powder may be deposited on one or both sides of the tip portion of the shank 110. Alternatively, as shown in Fig. 3, the metal powder may be deposited to surround the tip portion of the shank 110.

Next, in operation of setting diamond particles (S430), diamond particles are set on the tip portion of the shank having the metal powder deposited thereon.

In consideration of cuttability, the diamond particles may have an average particle size ranging from 25 to 50 mesh.

Diamond particle setting may be carried out using a jig, by dropping the diamond particles, or the like.

A mixture of diamond particles and metal powder can be deposited on the shank. However, in this case, there can be difficulty in achieving uniform dispersion of the diamond particles due to a large difference in specific gravity between the metal powder and the diamond particles. Thus, uniform dispersion of the diamond particles is advantageously obtained by depositing the metal powder on the tip portion of the shank, followed by setting the diamond particles on the metal powder.

Then, in operation of forming a brazing bond (S440), the metal powder is melted to form a brazing bond. More specifically, the metal powder is heated above a melting point of the metal powder to melt the metal powder, followed by cooling to form the brazing bond, which secures the diamond particles.

In this operation, the metal powder is heated to a temperature higher than or equal to the melting point of the metal powder and less than a melting point of the shank. More specifically, the melting temperature of the metal powder may be determined according to the composition of the metal powder deposited on the tip portion of the shank.

For example, when a metal powder comprising 1∼10wt% of silicon (Si), 5∼15 wt% of chromium (Cr), 5∼15 wt% of cobalt (Co), and the balance of nickel is deposited on the tip portion of the shank, the melting temperature of the metal powder may be set in the range from 980∼1200 °C in the operation of forming a brazing bond (S440).

If the melting temperature is less than 980°C, there can be difficulty in melting the metal powder. If the melting temperature exceeds 1200°C, there can be problems of diamond carburization and increase in manufacturing cost due to heating to high temperature.

Meanwhile, cooling of the metal powder melt may be performed in various ways including forcible cooling, natural cooling, and the like. Here, cooling may be performed within a furnace used for forming the brazing bond.

As described above, in the brazing bond type diamond tool according to the present invention, the tip portion of the shank is thinner than the shank body. As a result, the overall thickness of the cutting section is reduced, thereby improving cuttability. In addition, the thickness of the shank body is maintained at a certain level, thereby preventing the diamond tool from trembling during rotation at high speed.

Although some exemplary embodiments have been described herein, it should be understood by those skilled in the art that these embodiments are given by way of illustration only, and that various modifications, variations, and alterations can be made without departing from the spirit and scope of the present invention. Therefore, the scope of the present invention should be interpreted according to the following appended claims as covering all modifications or variations induced from the appended claims and equivalents thereof.

## Claims

1. A diamond tool comprising:
a shank having a body and a tip portion formed along an edge of the body, the tip portion being thinner than the body and integrally formed with the body; and
a brazing bond layer formed on the tip portion of the shank to secure diamond particles with a brazing bond.

2. The diamond tool according to claim 1, wherein the body has a thickness ranging from 1.0 mm to 3.0 mm.

3. The diamond tool according to claim 1, wherein the diamond particles have an average particle diameter ranging from 25 to 50 mesh.

4. The diamond tool according to claim 1, wherein the brazing bond comprises 1∼10 wt% of silicon (Si), 5∼15 wt% of chromium (Cr), 5∼15 wt% of cobalt (Co), and the balance of nickel.

5. The diamond tool according to claim 1, wherein the diamond tool is a flat blade type diamond tool.

6. A method of manufacturing a diamond tool comprising:
(a) preparing a shank including a body and a tip portion formed along an edge of the body, the tip portion being thinner than the body and integrally formed with the body;
(b) depositing a metal powder for forming a brazing bond on the tip portion of the shank;
(c) setting diamond particles on the tip portion having the metal powder deposited thereon; and
(d) melting the metal powder to form a brazing bond.

7. The method according to claim 6, wherein the body of the shank has a thickness ranging from 1.0 mm to 3.0 mm.

8. The method according to claim 6, wherein the metal powder comprises 1∼10 wt% of silicon (Si), 5∼15 wt% of chromium (Cr), 5∼15 wt% of cobalt (Co) and the balance of nickel, and the melting the metal powder comprises melting the metal powder at 980∼1200°C to form the brazing bond.

9. The method according to claim 6, wherein the diamond particles have an average particle size ranging from 25 to 50 mesh.
